# EUROPÄISCHE PATENTSCHRIFT

(11) **EP 1 439 657 B1**
(45) Veröffentlichungstag und Bekanntmachung des Hinweises auf die Patenterteilung: **26.02.2014**
(21) Anmeldenummer: 03028825.2
(22) Anmeldetag: 15.12.2003
(51) Int. Cl.: G05B 9/03, G08B 29/16, H04L 1/22, H04L 1/06

(54) **Verfahren und Vorrichtung zur sicheren Informationsübertragung**
Method and apparatus for secure information transmission
Procédé et dispositif pour la transmission sécurisée d'informations

(30) Priorität: 17.01.2003 DE 10301504
(43) Veröffentlichungstag der Anmeldung: 21.07.2004
(60) Teilanmeldung: 12003970.6
(73) Patentinhaber: PHOENIX CONTACT GmbH & Co. KG, 32825 Blomberg (DE)
(72) Erfinder: Meyer-Gräfe, Karsten, Dipl.-Ing., 33161 Hövelhof (DE); Stallmann, Oliver, Dipl.-Ing., 32257 Bünde (DE); Kalhoff, Johannes, Dipl.-Ing., 32825 Blomberg (DE); Horn, Steffen, Dipl.-Ing., 32825 Blomberg (DE); Gast, Torsten, 31855 Aerzen (DE)
(74) Vertreter: Bill, Burkart Hartmut

(56) Entgegenhaltungen:
- DE-A1- 10 037 737
- DE-A1- 19 920 299

## Beschreibung

Die Erfindung betrifft ein Verfahren und eine Vorrichtung zur Übertragung sicherer Prozesssignale zwischen Ein- und Ausgangseinheiten eines Sicherheitssystems.

Insbesondere bei standardisierte Netzwerke umfassenden Systemen, die hohen Sicherheitsanforderungen, wie z.B. SIL 3 nach dem Standard IEC 61508, oder beispielsweise der Sicherheitskategorie 4 nach EN 954-1 genügen müssen, ist die Außenbeschaltung beispielsweise von Sensoren bzw. Aktoren zweikanalig auszuführen, um durch die Redundanz die notwendige Sicherheit zu gewährleisten.

Eine derartige zweikanalige Außenbeschaltung wird bei Sicherheitssystemen herkömmlicherweise, ähnlich vergleichbaren anderen redundanten Außenbeschaltungen, über getrennte Signale von den Sensoren geführt, die über Ein-/Ausgangseinheiten üblicherweise unter Verwendung eines Netzwerkes oder eines Backplane-Busses eines integrierten Rechners zur Steuerung und/oder Logikverarbeitung übertragen werden. Die Steuerung und/oder Logikverarbeitung verarbeitet daraufhin die zweikanalige Signalbeschaltung mittels einer entsprechend angepassten Not-Aus-Funktionskomponente, welche somit ferner mit zwei Kanaleingängen auszubilden ist, und veranlasst in Folge eine sichere Reaktion. Die sichere Reaktion wird oftmals direkt an der Steuerung ausgeführt oder mittels Netzwerk und/oder Backplane-Bus des systemintegrierten Rechners zu einer entsprechenden Ausgangsbaugruppe, beispielsweise zu einem Aktor übertragen.

Die DE 100 37 737 A1 betrifft ein Verfahren und eine Vorrichtung zur sicheren einkanaligen Auswertung von Sensorsignalen. Dabei generiert ein Sensor entsprechende Sensorsignale, welche als Signalpaar zwei redundanten Auswertungen, insbesondere in Form von Analog-Digitalumsetzern zugeleitet und dort aufbereitet werden. Durch geschickte Modifikation (Codierung, Modulation etc.) des originalen Signalpaars wird ein weiteres Signalpaar generiert. Die Auswertung der Sensorsignale erfolgt in der Regel über eine Analog-Digital-Umsetzung und eine digitale Weiterverarbeitung. Wenn jedoch ein Signalumsetzer vorgeschaltet ist, so kann die Digitalisierung im Zeitmultiplex erfolgen. Das Originalsignal und das daraus abgeleitete Redundanzsignal werden digitalisiert und über eine Datenübertragungseinrichtung zwei getrennten Auswerteeinheiten zugeführt. In jeder Auswerteeinheit werden die Signalpaare auf Plausibilität geprüft. Die Vergleichseinrichtung vergleicht dann in Kenntnis des Signalgenerierungsalgorithmus die Ergebnisse beider Auswerteeinheiten. Alternativ kann eine Auswerteeinheit von der Verarbeitungseinrichtung in den Sensor verlagert werden. Die Berechnung des ersten Signalergebnisses kann von der Auswerteeinheit im Sensor direkt erfolgen, während die Berechnung des zweiten, für die Gewährleistung der Sicherheitsfunktion notwendigen Signalergebnisses in der übergeordneten Verarbeitungseinrichtung erfolgt. Der Vergleich der beiden Signalergebnisse erfolgt auch hier in Kenntnis des Verarbeitungsalgorithmus in der übergeordneten Verarbeitungseinheit. Gemäß der DE 100 37 737 A1 werden somit stets zwei Datenpakte - nämlich das originale Signalpaar und das weitere Signalpaar - zwischen dem Sensor und der Verarbeitungseinheit übertragen. Die beiden, im Zeitmultiplex digitalisierten Signalpaare werden seriell über eine gemeinsame Datenleitung übertragen und ermöglichen eine Plausibilitätsprüfung durch einen Signalergebnisvergleich in der Verarbeitungseinheit. Das weitere Signalpaar wurde dabei eigens zu diesem Zweck aus dem originalen Signalpaar generiert.

Aufgabe der Erfindung ist es, einen Weg aufzuzeigen, mit welchem die Übertragung und in Folge die Verarbeitung von sicheren Prozessinformationen auf wesentlich vereinfachte Weise gewährleistet wird, insbesondere bei zusätzlicher Steigerung der übertragbaren und/oder verarbeitbaren Datenmenge ohne Informationsverlust, welches folglich eine verbesserte Ausnutzung der Systemkapazität ermöglicht.

Die erfindungsgemäße Lösung ist auf höchst überraschende Weise bereits durch ein Verfahren mit den Merkmalen des Anspruchs 1, durch eine Vorrichtung mit den Merkmalen des Anspruchs 11 und durch ein System mit den Merkmalen des Anspruchs 20 gegeben.

Vorteilhafte und/oder bevorzugte Ausführungsformen bzw. Weiterbildungen sind Gegenstand der jeweiligen Unteransprüche.

Erfindungsgemäß ist somit vorgesehen, zum Übertragen von sicheren Prozessinformationen mehrere, zur Erkennung eines für ein System sicherheitsrelevanten Ereignisses redundant erfasste Prozesssignale zur systembasierten Weiterverarbeitung in ein einziges Prozesssignal Umzusetzen.

Die Erfindung gewährleistet somit, dass insbesondere bei Verwendung einer Vorrichtung zum sicheren Übertragen von zur Systemsicherheit redundant erfassten Prozesssignalen, welche Mittel zum Umsetzen mehrkanalig geführter Prozesssignale in ein einziges, an einem Ausgangskanal abgreifbares Prozesssignal umfasst, bei gleichem Gesamtinformationsgehalt eine wesentlich geringere zu übertragende und folglich weiter zu verarbeitende Datenmenge.

Darüber hinaus ermöglicht die Erfindung die Reduzierung von einer ansonsten zur sicheren Übertragung und systembasierten Weiterverarbeitung von redundant erfassten, sicherheitsrelevanten Signalen notwendigen mehrkanaligen Ausbildung von Signalführungspfaden auf einkanalig ausgebildete Signalführungspfade innerhalb des Systems. Die im System verwendeten Hardware- und/oder Softwareelemente zur Übertragung und/oder Weiterverarbeitung der sicherheitsrelevanten Prozessinformation können somit in vereinfachter und somit kostengünstigerer Weise hergestellt werden. Darüber hinaus ermöglicht die hieraus gewonnene Vereinfachung, insbesondere aufgrund der hierdurch ermöglichten Darstellung des eigentlichen Signalinhalts, eine wesentlich vereinfachte Projektierung und Programmierung sicherer Systeme.

In vorteilhafter Weiterbildung erfolgt die Umsetzung in ein digitales Signal, insbesondere um eine weiter vereinfachte und beschleunigte prozessorgestützte Weiterverarbeitung des Prozesssignals zur Veranlassung höchst zeitkritischer Reaktionen zu gewährleisten.

Umfassen in vorteilhafter Weiterbildung die Umsetzmittel einen A/D-Umsetzer, ist darüber hinaus die Erfassung und/oder Übertragung sowohl von digitalen und/oder analogen Prozesssignalen außenbeschalteter Einrichtungskomponenten gewährleistet, so dass im Wesentlichen jede handelsübliche bzw. kommerziell erhältliche Sicherheitskomponente, wie beispielsweise eine Not-Aus-Komponente oder ein Sensor zur Bereichsüberwachung von Lichtgittern, Schutztüren oder Scannern, dem System zur Speisung sicherheitsrelevanter Prozessinformationen angeschaltet werden kann.

In weiterer bevorzugter Ausführung ist vorgesehen, dass der Nutzinhalt des umgesetzten Prozesssignals in Form eines 1-Bit-Datums übertragen wird, welches applikationsspezifisch beispielsweise bereits unter Verwendung einer einfachen logischen "UND" Verknüpfungseinrichtung bereitstellbar ist. Ein einmal projektiertes und/oder im Betrieb befindliches Sicherheitskernsystem ist folglich unabhängig vom etwaigen Austausch oder von etwaigen Änderungen anschaltbarer systemsicherheitsrelevanter Ein- und/oder Ausgangskomponenten.

Zur weiteren Erhöhung der Sicherheit ist erfindungsgemäß ferner vorgeschlagen, dass die Übertragung des umgesetzten Prozessignals abgesichert, insbesondere mittels eines auf dem Nutzinhalt basierten Datensicherungswertes erfolgt, wobei in weiterer vorteilhafter Ausbildung die Mittel zur Absicherung des umgesetzten Signals zum Generieren und Anhängen wenigstens eines dem Nutzinhalt folgenden Prüfbits ausgebildet sind.

Für die Praxis hat sich hierbei der Einsatz eines sogenannten CRC (Cyclic Redundancy Check) zur weiteren wesentlichen Erhöhung der Fehlererkennungsrate als zweckmäßig erwiesen.

Die in bevorzugter Weise Hardware- und/oder Softwareelemente umfassenden Umsetzmittel sind in Vorteilhafterweise an im Wesentlichen jeder beliebig vorgebbaren und/vorgegeben Stelle eines Prozesssignalübertagungsweges einbindbar, so dass insbesondere auch nachträglich eine Erweiterung des Sicherheitssystems durch zusätzliche sicherheitsrelevante Komponenten gewährleistet ist.

Die Erfindung ist folglich im Wesentlichen in beliebigen Netzwerken einsetzbar und ermöglicht eine Anordnung von sicherheitsrelevanten Komponenten über das gesamte Netzwerk verteilt hinweg, ungeachtet von systembasierten Einheiten, wie Systemkopplern und Gateways, und zeichnet sich durch eine einfache und hohe Integration selbst in bestehende Techniken aus.

In vorteilhafter Weiterbildung ist ferner vorgesehen, dass darüber hinaus an vorgegebenen und/oder vorgebbaren Systemausgangsbaugruppen, wie beispielsweise systemspezifische Aktoren, Antriebe oder mechatronische Einheiten, das zur sicheren Systemverarbeitung einkanalig umgesetzte Prozesssignal auch wieder in mehrere, insbesondere über separate Kanäle geführte Prozesssignale umgesetzt wird.

Die Erfindung wird nachfolgend anhand einer bevorzugten Ausführungsform unter Bezugnahme auf die beigefügte Zeichnung näher beschrieben.

In der Zeichnung zeigt:
- Fig. 1: ein stark vereinfachtes Blockschaltbild eines Sicherheitssystems mit einer angeschalteten Not-Aus-Sicherheitseingangskomponente, und
- Fig. 2: eine Prinzipskizze betreffend eine Signalkette einer Sicherheitsfunktion gemäß der Erfindung.

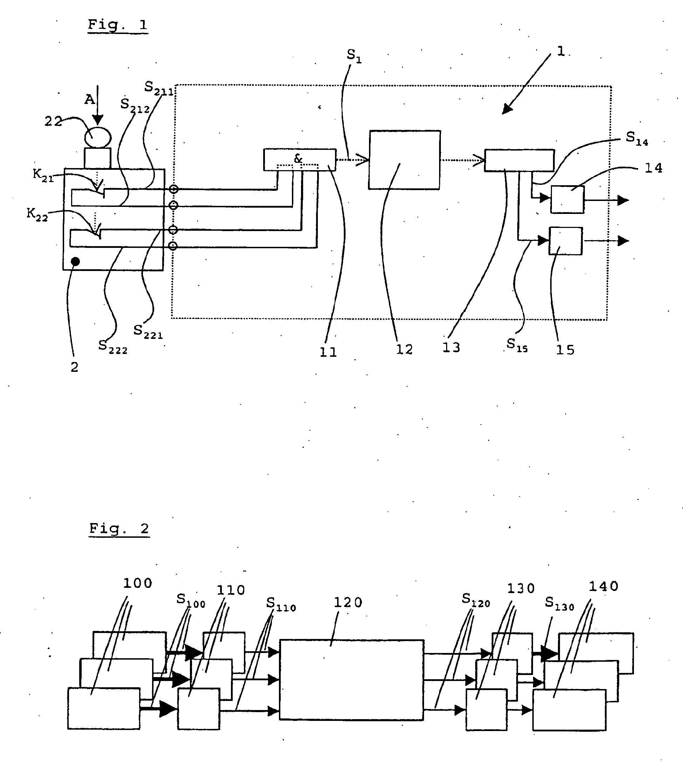

Unter Bezugnahme zunächst auf Fig. 1 ist ein im Ganzen mit 1 gekennzeichnetes Sicherheitssystem stark vereinfacht dargestellt, welches beispielsweise in der Fertigungsindustrie Personen-, Maschinen- und/oder umweltschutzbetreffende Bereiche sicherheitstechnisch steuert und/oder regelt.

Beispielhaft ist hierzu eine Not-Aus-Funktionskomponente 2 mit einer sicheren Eingangskomponente 11 des Sicherheitssystems 1 zur Erkennung eines ggfs. z.B. bei einem zu überwachenden Antrieb vorliegenden systemsicherheitsrelevenaten Ereignisses "Not-Aus" verbunden. Insbesondere bei bestehenden, vorstehend erwähnten hohen Sicherheitsanforderungen ist die Beschaltung einer derartigen Not-Aus Funktionskomponente 2 redundant, beispielsweise zweikanalig auszuführen. Im vorliegenden Beispielsfall befinden sich bei der dargestellten nicht aktivierten Not-Aus-Funktion zwei parallel angeordnete Kontakte K₂₁ und K₂₂ im kontaktgebenden Zustand, so dass die dem Kontakt K₂₁ zugeordneten Teilsignalpfade S₂₁₁ und S₂₁₂ über den geschlossenen Kontakt K₂₁ miteinander leitend verbunden sind. An der sicheren System-Eingangskomponente 11 ist in diesem Fall ein dem Kontakt K₂₁ zugeordnetes "Eins"-Signal abgreifbar. Entsprechend ist an den miteinander verbundenen Teilsignalzweigen S₂₂₁ und S₂₂₂ mittels der sicheren Eingangskomponente 11 ein dem Kontakt KS₂₂ zugeordnetes "Eins"-Signal abgreifbar.

Bei Betätigen der Not-Aus-Funktion durch Drücken eines Not-Aus-Tasters 22 in bei Fig. 1 mit A gekennzeichnete Richtung werden die Kontakte K₂₁ und K₂₂ geöffnet, so dass in Folge an der Eingangskomponente 11 über den somit unterbrochenen Signalpfad S₂₁₁-S₂₁₂ ein dem Kontakt K21 zugeordnetes "NULL"-Signal und über den unterbrochenen Signalkreislauf S₂₂₁-S₂₂₂ ein dem Kontakt K₂₂ zugeordnetes "NULL"-Signal abgreifbar ist.

Die beiden zur Sicherheit redundant erfassten Prozesssignale werden nun erfindungsgemäß mittels der sicheren Eingangskomponente 11 des Sicherheitssystems 1 auf ein einziges Prozesssignal S₁ reduziert. Das alleinige Prozesssignal S₁ wird über ein nicht näher dargestelltes Netzwerk und/oder einen Backplane-Bus eines Systemrechners somit über einen Kanal zur systembasierten Weiterverarbeitung einer Steuerung 12 mit entsprechend ausgebildeter Logikverarbeitung geführt. Ist eine sichere Reaktion unter Ansprechen auf das Prozesssignal S₁ zu veranlassen, wird diese direkt an der Steuerung 12 ausgeführt oder mittels Netzwerk und/oder Backplane-Bus weiter zu einer sicheren Ausgangskomponente 13 transferiert, welche über Reaktionssignale S₁₄ und S₁₅ Microcontroller 14 bzw. 15 zum Abschalten von zugeordneten, mit dem Sicherheitssystem 1 überwachten Bereichseinrichtungen, im vorliegenden Fall also zu überwachenden Antrieben, beispielsweise von Motoren oder Schütztüren, entsprechend ansteuern.

Insbesondere, um eine prozessorgestützte, zumindest onlinenahe Weiterverarbeitung des Prozesssignals S₁ zu gewährleisten erfolgt die Umsetzung bevorzugt in ein digitales Signal S₁.

Zur Generierung eines 1-Bit-Datums, umfasst im zugrundeliegenden Beispielsfall die sichere Eingangskomponente 11 bevorzugt eine mittels entsprechender Hardware- und/oder Softwareelementen ausgebildete logische "UND"-Verknüpfung hinsichtlich der beiden Signalkanäle S₂₁₁-S₂₁₂ und S₂₂₁-S₂₂₂.

Entsprechend weist das umgesetzte Prozesssignal S₁ den Wert "1" auf, sofern beide Schalter S₂₁ und S₂₂ geschlossen sind und also zwei zugeordnete redundante Prozesssignale mit jeweils einem dem Signalwert von "1" entsprechenden Signalinhalt über die sichere Eingangskomponente 11 abgreifbar sind. Ist die Not-Aus-Funktion aktiviert und also beide Signalpfade S₂₁₁-S₂₁₂ und S₂₂₁-S₂₂₂ unterbrochen, weist das umgesetzte Prozesssignal S₁ den Wert "0" auf. Entsprechend entspricht der Signalwert des Prozesssignals S₁ dem Wert "0" wenn einer der beiden Schalter S₂₁ und S₂₂ geöffnet ist, so dass im Fehler- oder Sicherheitsfall der Signalwert des Prozesssignals S₁ somit immer "0" ist.

Die Reduktion der redundant erfassten Prozesssignale auf das einzige Prozesssignal S₁ betrifft somit ausschließlich die Kanalzahl und nicht den Gesamtsignalinhalt. Wird zum Beispiel wie bei Fig. 1 auf Kurzschluss überwacht, basiert bei der erfindungsgemäßen systembasierten Weiterverarbeitung mit dem einkanaligen System zwischen der sicheren Eingangskomponente 11 und Ausgangskomponente 13 des Sicherheitssystems 1 der ein fehlerfreies Verhalten signalisierende Gesamtsignalinhalt folglich auf den für S₂₁₁-S₂₁₂ und S₂₂₁-S₂₂₂ hierbei gültigen Signalwerten "beide Kanäle 1".

Zur Erhöhung der Sicherheit, wird zwischen der gemäß Fig. 1 dargestellten sicheren Eingangskomponente 11 und der sicheren Ausgangskomponente 13, das Prozesssignal S₁ ferner abgesichert übertragen.

Praktischerweise wird hierzu mittels der Eingangskomponente 11 wenigstens ein Prüfbit oder eine Prüfsumme dem Nutzinhalt angehängt. Die sichere Eingangskomponente 11 umfasst bevorzugt Mittel, beispielsweise ein entsprechend angepasstes Schieberegister, um ein CRC-Verfahren durchzuführen. Der zu generierende CRC-Code wird je nach Applikation und/oder sicherheitssystemspezifischen Erfordernissen zur jeweils benötigten Absicherung entsprechend hoch generiert, z.B. ein CRC-32-Code. Es sei jedoch darauf hingewiesen, dass auch mit anderen, dem Fachmann an sich bekannten Mitteln geeignete sicherheitstechnische Maßnahmen durchgeführt werden können, um insbesondere dem internationalen Standard IEC 61508 zu genügen.

Unter zusätzlicher Bezugnahme auf Fig. 2 umfasst somit eine Signalkette gemäß der Erfindung zunächst das sichere Erfassen von Eingangsinformationen basierend auf anschaltbaren, sicherheitsrelevante Ereignisse auslösenden Funktionskomponenten 100, wie beispielsweise Sensoren. Die mittels redundanter Prozesssignale S₁₀₀ jeweils erfassten Ereignisse bzw. Prozessinformationen werden anschließend über sichere Eingangskomponenten 110 jeweils in ein einziges Prozesssignal S₁₁₀ zur weiteren systembasierten Verarbeitung umgesetzt wird. Es sei darauf hingewiesen, dass die umzusetzenden, also am Eingang der Eingangskomponenten 110 anliegenden Prozesssignale S₁₀₀ je nach spezifischer Applikation bzw. Schutzfunktionskomponente in digitaler und/oder analoger Form vorliegen. Zur Umsetzung von analogen Prozesssignalen S₁₀₀ durch die Eingangskomponenten 110 in ein digitales Prozesssignal S₁₀₁, umfasst die Umsetzeinrichtung eine entsprechende A/D-Wandlerkomponente.

Es sei ferner darauf hingewiesen, dass die Umsetzeinrichtungen 110 je nach systemspezifischer Ausführung auch in intelligenten Netzteilnehmerkomponenten oder mechatronischen Einheiten enthalten sein können und nicht zwingend als separate sichere Eingangskomponenten ausgebildet sein müssen.

Die nach den Umsetzeinrichtungen 110 abgesichert bereitgestellten Prozesssignale S₁₁₀ können folglich einkanalig über das Gesamtsystem, also insbesondere über wenigstens ein ring-, stern-, linien- und/oder baumartig ausgebildetes Netzwerk und/oder Busnetz einschließlich Übertragungsstrecken und Struktur-/Verarbeitungskomponenten transportiert werden.

Ferner erfolgt in den systembasierten weiterverarbeitenden Einrichtungen 120, wie z.B. Steuerungen und/oder Logiken und/oder Netzwerken, die Verarbeitung des umgesetzten Prozesssignals folglich einsignalig.

Zur Veranlassung sicherer Reaktionen in Ansprechung auf jeweilige Prozesssignale S₁₁₀ werden entsprechende Reaktionssignale S₁₂₀, die bevorzugt gleichermaßen einsignalig und abgesichert bereitgestellt werden, zu entsprechenden Ausgangskomponenten 130, die im vorliegenden Fall zur binären Signalverarbeitung ausgebildet sind, weitergeführt, um angeschaltete Ausgabefunktionskomponenten 140, wie beispielsweise Aktoren, insbesondere Antriebe und/oder mechatronische Einheiten, entsprechend der veranlassten Reaktionen zur sicheren Ausgabe und/oder zum sicheren Abschalten anzusteuern.

Wie bei Fig. 2 angedeutet, sind von der Erfindung ferner Ausführungsformen umfasst, bei denen die sicheren Ausgangskomponenten 130 wenigstens zum Teil auch derart ausgebildet sind, dass ein einkanalig zugeführtes Prozesssignal S₁₂₀ mit gesicherter Prozessinformation wieder in mehrere, auch über separate Kanäle übertragbare Prozesssignale S₁₃₀ zur Ansteuerung der Ausgabefunktionskomponente 140 umgesetzt wird.

Die erfindungsgemäße Anwendung zum vereinfachten Übertragen von sicheren Prozessinformationen ermöglicht somit zusätzlich zur wesentlich verbesserten Kapazitätsausnutzung aufgrund geringerer sicher zu übertragender Datenmengen bei gleichem Informationsgehalt eine wesentliche Vereinfachung bei der Projektierung und Programmierung sicherer Systeme. Dies basiert insbesondere darauf, dass die sonst in der Hardware-Sicht zweikanalig bzw. mehrkanalig ausgeführten Verknüpfungen unter Zugrundelegung der Erfindung nunmehr einsignalig, den eigentlichen Sinninhalt darstellend, ausgeführt werden, welches weitestgehend der Erwartungshaltung des Projektierers, Programmierers und/oder Servicetechnikers entspricht, der beispielsweise den Ausgang "Motor" als ein Signal, "Motor ein " oder "Motor aus ", erkennt. Vor bzw. nach der Umsetzstelle liegt somit eine andere Sichtweise vor.

Da die Umsetzung bzw. Reduktion von mehreren, ein Systemsicherheitsrelevantes Ereignis beschreibenden Prozesssignalen in ein einziges Prozesssignal im Wesentlichen an beliebiger Stelle des Prozesssignalübertragunsweges erfolgen kann, wie beispielsweise auch in Backplane-Systemen, umfasst die Erfindung eine Vielzahl von Ausführungsformen, bei denen die Umsetzeinrichtungen im Wesentlichen über das gesamte Sicherheitssystem und/oder Netzwerk verteilt sind, ungeachtet von etwaigen Systemkopplern und Gateways.

Insgesamt ist der erfindungsgemäße Gegenstand bei Sicherheitssystemen nicht nur in der Fertigungsindustrie insbesondere zur Überwachung von Not-Aus-Funktionen, von Bereichen, wie beispielsweise von Lichtgittern, Schutztüren und/oder Scannern, von diversen Applikationen, wie beispielsweise von Robotern, Bereichsübergängen einschließlich Muting, Blanking und/oder Pressen, und für die sicherheitstechnische Steuerung und/oder Regelung von Aktorik und Sensorik, insbesondere mit integrierter Sicherheit einsetzbar, sondern ferner insbesondere im Bereich des Personentransports, wie beispielsweise bei Bergbahnen oder Aufzügen, in der Gebäudetechnik, der Feuerungstechnik und der Prozessindustrie, um nur einige Anwendungsbeispiele zu nennen.

Zwischen den sicheren, systemspezifisch intelligenten Ein- und Ausgangskomponenten 110, 130 und der sicherheitssteuernden Logikverarbeitung 120 wird folglich aufgrund der in den Umsetzeinrichtungen 110, 130 ausgeführten sicherheitsrelevanten vorverarbeitenden Funktionen, gemäß vorstehender Beschreibung, bevorzugt ausschließlich abgesicherte, einkanalige sicherheitsrelevante Prozessinformationen übertragen.

## Patentansprüche

1. Verfahren zum Übertragen von sicheren Prozessinformationen **dadurch gekennzeichnet, dass** mehrere, zur Erkennung eines Systemsicherheits relevanten Ereignisses, redundant erfasste Prozesssignale (S₂₁₁-S₂₁₂, S₂₂₁-S₂₂₂, S₁₀₀), welche jeweils einen Signalwert repräsentierenden Signalinhalt aufweisen, zur Systembasierten Weiterverarbeitung in ein einziges Prozesssignal (S₁, S₁₁₀) umgesetzt werden, **gekennzeichnet dadurch, dass** das umgesetzte Prozesssignal als Nutzinhalt nur einen einzigen Signalwert aufweist.

2. Verfahren nach Anspruch 1, ferner **dadurch gekennzeichnet, dass** die redundant erfassten Prozesssignale (S₂₁₁-S₂₁₂, S₂₂₁-S₂₂₂, S₁₀₀) bis zur Umsetzung über mehrere Kanäle erfasst werden und das umgesetzte Prozesssignal (S₁, S₁₁₀) über einen Kanal übertragen wird.

3. Verfahren nach Anspruch 1 oder 2, ferner **dadurch gekennzeichnet, dass** die Erfassung digital oder analog erfolgt.

4. Verfahren nach einem der vorstehenden Ansprüche, ferner **dadurch gekennzeichnet, dass** die Umsetzung in ein digitales Prozesssignal (S₁, S₁₁₀) erfolgt.

5. Verfahren nach einem der vorstehenden Ansprüche, ferner **dadurch gekennzeichnet, dass** als Nutzinhalt des Prozesssignals (S₁, S₁₁₀) ein 1-Bit-Datum übertragen wird.

6. Verfahren nach einem der vorstehenden Ansprüche, ferner **dadurch gekennzeichnet, dass** die Übertragung des umgesetzten Prozesssignals (S₁, S₁₁₀) abgesichert erfolgt.

7. Verfahren nach einem der vorstehenden Ansprüche, ferner **dadurch gekennzeichnet, dass** dem Nutzinhalt des umgesetzten Prozesssignals (S₁, S₁₁₀) unter Ansprechen auf das Umsetzen wenigstens ein Prüfbit angehängt wird.

8. Verfahren nach einem der vorstehenden Ansprüche, ferner **dadurch gekennzeichnet, dass** zur Erzeugung des wenigstens einen Prüfbits ein CRC-Verfahren eingesetzt wird.

9. Verfahren nach einem der vorstehenden Ansprüche, ferner **dadurch gekennzeichnet, dass** die Umsetzung an einer beliebig vorgebbaren oder vorgegebenen Stelle des Prozesssignalübertragungsweges erfolgt.

10. Verfahren nach einem der vorstehenden Ansprüche, ferner **dadurch gekennzeichnet, dass** an einer vorgebbaren oder vorgegeben System-Ausgangskomponente (13, 130) das systemintern einkanalig übertragene Prozesssignal (S₁, S₁₁₀, S₁₂₀) wieder in mehrere, insbesondere über separate Kanäle geführte Prozesssignale (S₁₃₀) umgesetzt wird.

11. Vorrichtung zum sicheren Übertragen von zur Systemsicherheit redundant erfassten Prozesssignalen (S₂₁₁-S₂₁₂, S₂₂₁-S₂₂₂, S₁₀₀),
**gekennzeichnet durch**
Mittel (11, 110) zum Umsetzen von mehrkanalig zugeführten Prozesssignalen (S₂₁₁-S₂₁₂, S₂₂₁-S₂₂₂, S₁₀₀), welche jeweils einen Signalwert repräsentierenden Signalinhalt aufweisen, in ein einziges, über einen Kanal übertragbares Prozesssignal (S₁, S₁₁₀), **gekennzeichnet dadurch, dass** das umgesetzte Prozesssignal als Nutzinhalt nur einen einzigen Signalwert aufweist.

12. Vorrichtung nach Anspruch 11, ferner umfassend Mittel (12, 120) zur Systembasierten Weiterverarbeitung einkanalig geführter Prozesssignale (S₁, S₁₁₀).

13. Vorrichtung nach Anspruch 11 oder 12, bei welcher die Umsetzmittel einer Eingangskomponente (11), Ausgangskomponente (13), einer intelligenten Netzteilnehmerkomponente oder mechatronischer Einheit zugeordnet sind.

14. Vorrichtung nach einem der Ansprüche 11 bis 13, ferner **dadurch gekennzeichnet, dass** die Umsetzmittel (11) zur Erzeugung eines 1-Bit-Datums (S₁) ausgebildet sind.

15. Vorrichtung nach einem der Ansprüche 11 bis 14, bei welcher die Umsetzmittel (11) eine logische UND-Verknüpfungseinrichtung umfassen.

16. Vorrichtung nach einem der Ansprüche 11 bis 14, ferner **dadurch gekennzeichnet, dass** die Umsetzmittel (11, 110) Mittel zur Absicherung des umgesetzten Prozesssignals (S₁) aufweisen.

17. Vorrichtung nach Anspruch 16, ferner **dadurch gekennzeichnet, dass** die Umsetzmittel (11, 110) zur Absicherung Mittel zum Generieren wenigstens eines Prüfbits und zum Anhängen des wenigstens eines Prüfbits an den Signalinhalt des Prozesssignals (S₁) umfassen.

18. Vorrichtung nach einem der Ansprüche 11 bis 17, ferner **dadurch gekennzeichnet, dass** die Umsetzmittel (11, 110) zur Anwendung eines CRC-Verfahrens ausgebildet sind.

19. Vorrichtung nach einem der Ansprüche 11 bis 18, ferner **dadurch gekennzeichnet, dass** die Umsetzmittel Hardware- und/oder Softwareelemente umfassen.

20. Sicherheitssystem, insbesondere wenigstens ein Netzwerk für eine Automatisierungsanlage umfassend, mit wenigstens einer Vorrichtung nach einem der Ansprüche 11 bis 19.

## Claims

1. Method for the transmission of secure process information, **characterised in that** a plurality of process signals (S₂₁₁-S₂₁₂, S₂₂₁-S₂₂₂, S₁₀₀) which are detected redundantly for the purpose of identifying an event relevant to system security and comprise signal content in each case representing a signal value, are converted for system-based further processing into a single process signal (S₁, S₁₁₀), **characterised in that** the converted process signal comprises as useful content only a single signal value.

2. Method as claimed in claim 1, further **characterised in that** the redundantly detected process signals (S₂₁₁-S₂₁₂, S₂₂₁-S₂₂₂, S₁₀₀) are detected via a plurality of channels until conversion and the converted process signal (S₁, S₁₁₀) is transmitted via one channel.

3. Method as claimed in claim 1 or 2, further **characterised in that** the detection is effected in digital or analogue form.

4. Method as claimed in any one of the preceding claims, further **characterised in that** the conversion process is carried out to form a digital process signal (S₁, S₁₁₀).

5. Method as claimed in any one of the preceding claims, further **characterised in that** a 1-bit data item is transmitted as the useful content of the process signal (S₁, S₁₁₀).

6. Method as claimed in any one of the preceding claims, further **characterised in that** the transmission of the converted process signal (S₁, S₁₁₀) is effected in a protected manner.

7. Method as claimed in any one of the preceding claims, further **characterised in that** in response to the conversion, at least one check bit is attached to the useful content of the converted process signal (S₁, S₁₁₀).

8. Method as claimed in any one of the preceding claims, further **characterised in that** a CRC method is used to produce the at least one check bit.

9. Method as claimed in any one of the preceding claims, further **characterised in that** the conversion process is carried out at a randomly specifiable or specified point on the process signal transmission path.

10. Method as claimed in any one of the preceding claims, further **characterised in that** at a specifiable or specified system output component (13, 130) the process signal (S₁, S₁₁₀, S₁₂₀) which is transmitted within the system via one channel is then converted into a plurality of process signals (S₁₃₀) carried in particular via separate channels.

11. Apparatus for the secure transmission of process signals (S₂₁₁-S₂₁₂, S₂₂₁-S₂₂₂, S₁₀₀) which are detected redundantly for the purpose of system security, **characterised by** means (11, 10) for converting process signals (S₂₁₁-S₂₁₂, S₂₂₁-S₂₂₂, S₁₀₀), which are supplied via multiple channels and comprise signal content in each case representing a signal value, into a single process signal (S₁, S₁₁₀) which can be transmitted via one channel, **characterised in that** the converted process signal comprises as useful content only a single signal value.

12. Apparatus as claimed in claim 11, further comprising means (12, 120) for system-based further processing of process signals (S₁, S₁₁₀) carried via one channel.

13. Apparatus as claimed in claim 11 or 12, wherein the conversion means are allocated to an input component (11), output component (13), an intelligent network subscriber component or mechatronic unit.

14. Apparatus as claimed in any one of claims 11 to 13, further **characterised in that** the conversion means (11) are designed for the purpose of producing a 1-bit data item (S₁).

15. Apparatus as claimed in any one of claims 11 to 14, wherein the conversion means (11) comprise a logic AND gate.

16. Apparatus as claimed in any one of claims 11 to 14, further **characterised in that** the conversion means (11, 110) comprise means for protecting the converted process signal (S₁).

17. Apparatus as claimed in claim 16, further **characterised in that** the conversion means (11, 110) comprise, for protection purposes, means for generating at least one check bit and for attaching the at least one check bit to the signal content of the process signal (S₁).

18. Apparatus as claimed in any one of claims 11 to 17, further **characterised in that** the conversion means (11, 110) are designed for application of a CRC method.

19. Apparatus as claimed in any one of claims 11 to 18, further **characterised in that** the conversion means comprise hardware and/or software elements.

20. Security system, comprising in particular at least one network for an automation system, having at least one apparatus as claimed in any one of claims 11 to 19.

## Revendications

1. Procédé de transmission d'informations de processus sécurisées, **caractérisé en ce que** plusieurs signaux de processus (S₂₁₁-S₂₁₂, S₂₂₁-S₂₂₂, S₁₀₀) détectés de manière redondante pour l'identification d'un événement pertinent pour la sécurité d'un système, lesquels présentent chacun un contenu de signal représentant une valeur de signal, sont convertis en un seul signal de processus (S₁, S₁₁₀) pour le traitement orienté système, **caractérisé en ce que** le signal de processus converti ne présente qu'une seule valeur de signal en tant que contenu utile.

2. Procédé selon la revendication 1, **caractérisé en outre en ce que** les signaux de processus (S₂₁₁-S₂₁₂, S₂₂₁-S₂₂₂, S₁₀₀) détectés de manière redondante sont détectés sur plusieurs canaux jusqu'à conversion et **en ce que** le signal de processus (S₁, S₁₁₀) converti est transmis sur un seul canal.

3. Procédé selon la revendication 1 ou 2, **caractérisé en outre en ce que** la détection est effectuée de manière numérique ou analogique.

4. Procédé selon l'une des revendications précédentes, **caractérisé en outre en ce que** la conversion s'effectue vers un signal de processus (S₁, S₁₁₀) numérique.

5. Procédé selon l'une des revendications précédentes, **caractérisé en outre en ce qu'**une donnée de 1 bit est transmise comme contenu utile du signal de processus (S₁, S₁₁₀).

6. Procédé selon l'une des revendications précédentes, **caractérisé en outre en ce que** la transmission du signal de processus (S₁, S₁₁₀) converti est effectuée de manière sécurisée.

7. Procédé selon l'une des revendications précédentes, **caractérisé en outre en ce qu'**au moins un bit de contrôle est annexé au contenu utile du signal de processus (S₁, S₁₁₀) converti en réaction à la conversion.

8. Procédé selon l'une des revendications précédentes, **caractérisé en outre en ce qu'**un procédé CRC est appliqué pour générer l'au moins un bit de contrôle.

9. Procédé selon l'une des revendications précédentes, **caractérisé en outre en ce que** la conversion est effectuée à un emplacement définissable ou défini de manière quelconque du trajet de transmission du signal de processus.

10. Procédé selon l'une des revendications précédentes, **caractérisé en outre en ce que** le signal de processus (S₁, S₁₁₀, S₁₂₀) transmis sur un canal de manière interne au système est reconverti sur une composante de sortie du système (13, 130) définissable ou définie en plusieurs signaux de processus (S₁₃₀) notamment acheminés sur des canaux séparés.

11. Dispositif pour la transmission sécurisée de signaux de processus (S₂₁₁-S₂₁₂, S₂₂₁-S₂₂₂, S₁₀₀) détectés de manière redondante pour la sécurité d'un système, **caractérisé par** des moyens (11, 110) de conversion de signaux de processus (S₂₁₁-S₂₁₂, S₂₂₁-S₂₂₂, S₁₀₀) acheminés par plusieurs canaux, lesquels présentent chacun un contenu de signal représentant une valeur de signal, en un seul signal de processus (S₁, S₁₁₀) pouvant être acheminé sur un seul canal, **caractérisé en ce que** le signal de processus converti ne présente qu'une seule valeur de signal en tant que contenu utile.

12. Dispositif selon la revendication 11, comprenant en outre des moyens (12, 120) pour le traitement orienté système de signaux de processus (S₁, S₁₁₀) acheminés par un seul canal.

13. Dispositif selon la revendication 11 ou 12, dans lequel les moyens de conversion sont associés à une composante d'entrée (11), une composante de sortie (13), une composante d'abonné réseau intelligente ou à une unité mécatronique.

14. Dispositif selon l'une des revendications 11 à 13, **caractérisé en outre en ce que** les moyens de conversion (11) sont prévus pour générer une donnée de 1 bit (S₁).

15. Dispositif selon l'une des revendications 11 à 14, dans lequel les moyens de conversion (11) comprennent un dispositif de chaînage logique ET.

16. Dispositif selon l'une des revendications 11 à 14, **caractérisé en outre en ce que** les moyens de conversion (11, 110) comportent des moyens de sécurisation du signal de processus (S₁) converti.

17. Dispositif selon la revendication 16, **caractérisé en outre en ce que** les moyens de conversion (11, 110) comprennent, pour la sécurisation, des moyens de génération d'au moins un bit de contrôle et d'annexion de l'au moins un bit de contrôle au contenu du signal de processus (S₁).

18. Dispositif selon l'une des revendications 11 à 17, **caractérisé en outre en ce que** les moyens de conversion (11, 110) sont prévus pour l'application d'un procédé CRC.

19. Dispositif selon l'une des revendications 11 à 18, **caractérisé en outre en ce que** les moyens de conversion comprennent des éléments matériels et/ou logiciels.

20. Système de sécurité, comprenant en particulier au moins un réseau pour une installation d'automatisation, avec au moins un dispositif selon l'une des revendications 11 à 19.
